# EUROPÄISCHE PATENTANMELDUNG

(11) **EP 0 598 700 A1**
(43) Veröffentlichungstag der Anmeldung: **25.05.1994**
(21) Anmeldenummer: 93890226.9
(22) Anmeldetag: 16.11.1993
(51) Int. Cl.: B65F 3/22, B60P 3/16

(54) **Müllfahrzeug mit als Sammelbehälter dienender Drehtrommel**

(30) Priorität: 18.11.1992 AT 2282/92
(71) Anmelder: Brosowitsch, Josef, A-1170 Wien (AT)
(72) Erfinder: Brosowitsch, Josef, A-1170 Wien (AT)

(57) **Zusammenfassung**

Müllfahrzeug mit einer als Sammelbehälter dienenden Drehtrommel, deren heckseitig offenes Ende durch einen in Bezug auf die Trommel undrehbar gehaltenen, mit einem an einem Kegelstumpf angeordneten Leit- oder Verdichtungsblech ausgerüsteten, hydraulisch hochschwenkbaren Deckel verschließbar ist und deren vordere geschlossenen Stirnwand mit einem zentralen Drehzapfen in einem Lagebock gelagert ist und deren heckseitige Lagerung mittels eines Großkugellagers erfolgt, wobei am hinteren Ende der Drehtrommel an ihrem Außenmantel eine Zahnkranz, eine den Behälter rutschfest umspannende Kette, ein Rollenring od. dgl. zur Einleitung des Drehantriebes mittels einer ein Zahnritzel, einen Zykloidenantrieb od. dgl. aufweisenden Antriebseinheit angeordnet ist, wobei der Lagerträger aus einem oberen und einen unteren, je eine Bogenhälfte des Außenringes des Großkugellagers (6) umhüllenden, insbesondere als Kastenträger ausgebildeten Lagerträger (14;15) besteht und die Lagerträger (14;15) in vertikaler Richtung - im Bereich einer Ebene parallel zur Behälterachse - in einem Abstand (s) voneinander angeordnet sind und die Lagerträger (14;15) zu beiden Seiten der Drehtrommel (3), im wesentlichen waagrecht liegende, in Längsrichtung der Drehtrommel (3) verlaufende Träger (16,17;16a,17a) aufweisen, welche mittels Spannelementen (18,18a) in einer zur Ebene des Großkugellagers (6) parallel und im Abstand (a) liegenden Ebene miteinander verbunden sind. Der obere Lagerträger (14) trägt dabei die Lagerungen für den Deckel (7) und dessen Schwenkzylinder (10) und der untere Lagerträger (15) die Antriebseinheit (20a bzw. 20b) und die Verriegelungen für den Deckel (7). Dadurch wird erreicht, daß die Biegebelastung des Großkugellagers (6) durch die Müllverdichtungskräfte verhindert wird und die inneren Kräfte durch die Deckelverriegelung und den Trommelantrieb optimal abgeleitet und über einen größeren Bereich des Außenringes des Großkugellagers (6) verteilt werden.

## Beschreibung

Die Erfindung betrifft ein Müllfahrzeug, mit einer als Sammelbehälter dienender Drehtrommel, deren heckseitig offenes Ende durch einen in Bezug auf die Trommel undrehbar gehaltenen, mit einem an einem Kegelstumpf angeordneten Leit- oder Verdichtungsblech ausgerüsteten, hydraulisch hochschwenkbaren Deckel verschließbar ist und deren vordere geschlossene Stirnwand mit einem zentralen Drehzapfen in einem Lagerbock gelagert ist und deren heckseitige Lagerung mittels eines Großkugellagers, unter Befestigung seines Außenringes an einem unteren Träger erfolgt, der sich an einem Zapfen abstützt, welcher an einem am Fahrzeugrahmen befestigten Hilfsrahmen unterhalb der Trommeldrehachslinie sitzt und der im rechten Winkel zur Tommeldrehachslinie beidseits des Zapfens lose auf dem Hilfsrahmen aufliegt, wobei am hinteren Ende der Drehtrommel an ihrem Außenmantel ein Zahnkranz, eine den Behälter rutschfest umspannende Kette, ein Rollenring od. dgl., zur Einleitung des Drehantriebes mittels einer ein Zahnritzel, einen Zykloidenantrieb od. dgl. aufweisenden Antriebseinheit angeordnet ist.

Es sind bereits Müllfahrzeuge der eingangs genannten Art bekannt, z.B. aus der AT-PS 362 721, bei welchen der Träger als den Außenring des Großkugellagers mit je einer Seitenwandpartie tangierender, ihn insgesamt umfassender Kastenträger, der für den hochklappbaren Deckel sowohl die Gelenke als auch die Lager für die Öffnungszylinder, als auch die Verriegelungen aufweist, sowie das Lager für das Zahnritzel trägt, wobei der Zahnkranz im Längsbereich des Kastenträgers angeordnet ist. Damit soll erreicht werden, daß der Außenring des Großkugellagers von der Aufnahme der Kräfte für die Deckelhalterung und -verriegelung entlastet wird. Nachteilig ist jedoch dabei, daß gerade durch den starren, das Großkugellager insgesamt umfassenden Kastenträger ein zusätzliches Biegemoment in den Außenring des Großkugellagers eingeleitet wird, da vor allem die hohen Verdichtungskräfte als Biegebelastung des Außenringes Ausdruck finden. Zudem genügt es nicht zum Schließen eines Kraftkreises für den Drehantrieb das Lager für das Zahnritzel im geschlossenen Kastenträger anzuordnen, da z.B. bei dem auch in der AT-PS 362 721 angeführten wahlweisen Antrieb über eine flexible Kupplung vom Fahrzeugnebenantrieb ein äußeres Reaktionsmoment auftritt, wodurch eine unerwünschte Fahrzeugrahmenverwindung entsteht. Weiters ist aus der DE-PS 738 695 bekannt, für den Antrieb von Drehtrommeln das Zahnritzel an einem das Trommellager insgesamt umfassenden Lagerträger anzuordnen. Dadurch wird in Bezug auf die Drehtrommel ein geschlossener Kraftkreis erzielt, womit vom Zahneingriff her keine resultierenden Kräfte nach außen hin auftreten. Nach der DE-AS 31 13 819 ist es ferner bekannt, den Außenring des Großkugellagers mit einem einstückigen T-Profil zu umfassen, an welchem der Deckel und dessen Verriegelungen befestigt sind. Allerdings weist dieses Fahrzeug einen frontseitigen Antrieb für die Drehtrommel auf, wobei mittels eines den Müllbehälter umfassenden Torsionszylinders die Rahmenverwindung des Fahrgestelles hintan gehalten werden soll. Bei dieser Ausführung ist jedoch durch den, den Außenring insgesamt umfassenden T-Profilträger und den Torsionszylinder keine Gewichtsersparnis zu erwarten.

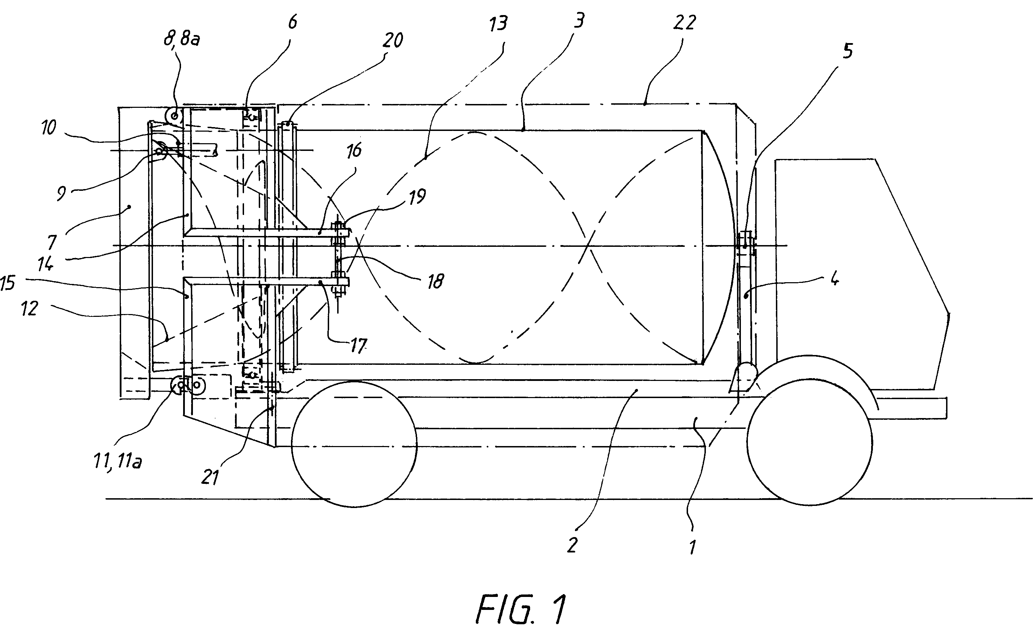

Aus dem DE-GbM 713 24 10 ist es weiters bekannt, am Außenring des Großugellagers Konsolen zu befestigen, welche sowohl die Deckellagerung und die Deckelöffnungszylinder, als auch, im Bereich der unteren Lagerkonsole die Deckelverriegelung aufweisen. Die untere Lagerkonsole ist dabei mittels eines senkrecht stehenden Bolzens am Hilfrahmen gelagert. Aus dem genannten DE-GbM geht ferner hervor (Fig. 1), daß der Zahnkranz unmittelbar neben dem Großkugellager angeordnet ist. Die Drehtrommel ist dabei in Form einer Drei-Punkt-Lagerung am nachgiebigen Fahrgestell gelagert. Da bei dieser Ausführung sämtliche Kräfte, welche am heckseitigen Lagerdeckel angreifen, vom Großkugellager aufgenommen werden müssen, ist ein schweres Lager erforderlich.

Es ist daher Aufgabe der Erfindung, bei einem Müllfahrzeug der eingangs genannten Art, das bei bekannten Ausführungen auftretende hohe Biegemoment des Großkugellagers als Folge der Müllverdichtungskräfte im Entstehungsbereich, nämlich in der waagrecht liegenden, seitlichen Behältermitte zu verhindern und so das Großkugellager wirkungsvoll zu entlasten. Zur Lösung dieser Aufgabe wird erfindungsgemäß vorgeschlagen, daß der Lagerträger aus einem oberen und einem unteren, je eine Bogenhälfte des Außenringes des Großkugellagers umhüllenden, insbesondere als Kastenträger ausgebildeten Lagerträger besteht und die Lagerträger in vertikaler Richtung - im Bereich einer Ebene, parallel zur Behälterachse - in einem Abstand voneinander angeordnet sind und die Lagerträger zu beiden Seiten der Drehtrommel, im wesentlichen waagrecht liegende, in Langsrichtung der Drehtrommel verlaufende Träger aufweisen, welche mittels Spannelementen in einer, zur Ebene des Großkugellagers parallel und im Abstand liegenden Ebene miteinander verbunden sind, wobei der obere Lagerträger die Lagerungen für den Deckel und dessen Schwenkzylinder und der untere Lagerträger die Antriebseinheit und die Verriegelungen für den Deckel trägt und der Abstand der Lagerträgerverbindung zur Ebene des Großkugellagers größer ist als die in Langsrichtung der Drehtrommel gemessene Breite der Lagerträger, und daß der Zahnkranz am Außenmantel der Drehtrommel vorzugsweise in einem Bereich außerhalb der Lagerträger vorgesehen ist.

Damit ist es erstmals möglich, das Großkugellager von der hohen Biegebelastung zu befreien und eine gewichtsmäßig sparsame und belastungsmäßig optimale Lösung zu realisieren. Im diesem Zusammenhang sei erwähnt, daß die axiale Lagerbelastung des Großkugellagers der Höhe des vollen Preßdruckes von ca. 30 t entspricht, wogegen das Gewicht des hinteren Deckels samt Schnecke und Schüttung nur etwa 3 t ausmachen.

Weitere Ausbildungen der Erfindung sind Gegenstand der Ansprüche 2 bis 4. Eine hohe Festigkeit bei geringem Gewicht wird dadurch erzielt, daß die Lagerträger als Fachwerksträger ausgebildet sind. Ebenso bietet die Möglichkeit, den den Außenring des Großkugellagers axial abstützenden Zapfen, in Fahrtrichtung gesehen, hinter dem Großkugellager anzuordnen, den Vorteil, daß dieser Zapfen eine geringere Querbelastung aufzunehmen hat. Dadurch, daß die Träger wahlweise mit einer Zug- oder Druckstange, einem Spannschloß, einem Scharnier oder einer elastischen Gummi-Federverbindung miteinander verbunden sind, wird eine starre Verbindung der beiden Lagerträger vermieden.

Mit Hilfe der Zeichnungen soll nun der Erfindungsgegenstand näher beschrieben werden. Es zeigen: Fig. 1 den kompletten Müllwagen in Seitenansicht, Fig. 2 die erfindungsgemäße Lagerträgerkonstruktion, Fig. 3 die Kräftekonstellation bei einem bisher bekannten geschlossenen Kastenträger, Fig. 4 das Müllfahrzeug in Heckansicht, bei geöffnetem hinteren Deckel, Fig.5 einen Schnitt x-x durch die heckseitige Lagerträgerkonstruktion, die Fig.6 und 7 zeigen bevorzugte Verbindungsmöglichkeiten der beiden Lagerträger.

Wie in Fig. 1 erkennbar ist, weist ein Fahrgestell -1- einen Hilfsrahmen -2- auf, an dessen vorderem Ende ein Lagerträger -4- angeodnet ist, in welchem die Drehtrommel -3- mit einem zentralen Zapfen -5- drehbar gelagert ist. Am hinteren Ende ist die Drehtrommel -3- in einem Großkugellager -6- drehbar gelagert, welches zwei Lagerträger -14,15- aufweist, die in einem vertikalen Abstand voneinander angeordnet sind. Der obere und untere Lagerträger -14- bzw. -15- sind mittels einer Spannschraube -18- miteinander verstellbar verbunden, und zwar über zwei, die Lagerträger -14,15- verlängernde Träger -16,17-. Der obere Lagerträger -14- weist die Lagerungen -8,8a- für den hochschwenkbaren hinteren Deckel -7- auf, sowie eine Lagerung für die Schwenkzylinder -10- des Deckels -7-, welche in einer Lagerstelle -9- in den Deckel -7- eingreifen. Der Deckel -7- trägt ferner einen Blechkonus -12-, der seinerseits einen, den Müll verdichtenden Schneckengang trägt. Im Inneren des Behälters -3- sind ferner doppelgängige Schraubenbleche -13- vorgesehen, welche zur vollständigen Behälterentleerung bzw. auch zur leichteren Befüllung beitragen. Der untere Kastenträger -15- trägt Verriegelungen -11,11a- für den Deckel -7- und einen senkrecht stehenden Lagerzapfen -21-, zur Aufnahme der waagrechten, außen angreifenden Kräfte. Der Behälter -3- trägt ferner an seinem Umfang einen Zahnkranz, Rollenkranz od. dgl. -20- in welchem eine Antriebseinheit -20a- bzw. -20b- eingreift und den Behälter -3- in Rotation versetzt. Eine Verkleidung -22- umschließt den ganzen Aufbau des Fahrzeuges und ist, wie im Beispiel nach Fig. 1 dargestellt ist, bereits bis unter den Fahrzeugrahmen nach unten verlängert ausgeführt, um den neuen gesetzlichen Sicherheitsbestimmungen Rechnung zu tragen. Die Verkleidung ist also gleichzeitig als Unterfahrschutz ausgebildet.

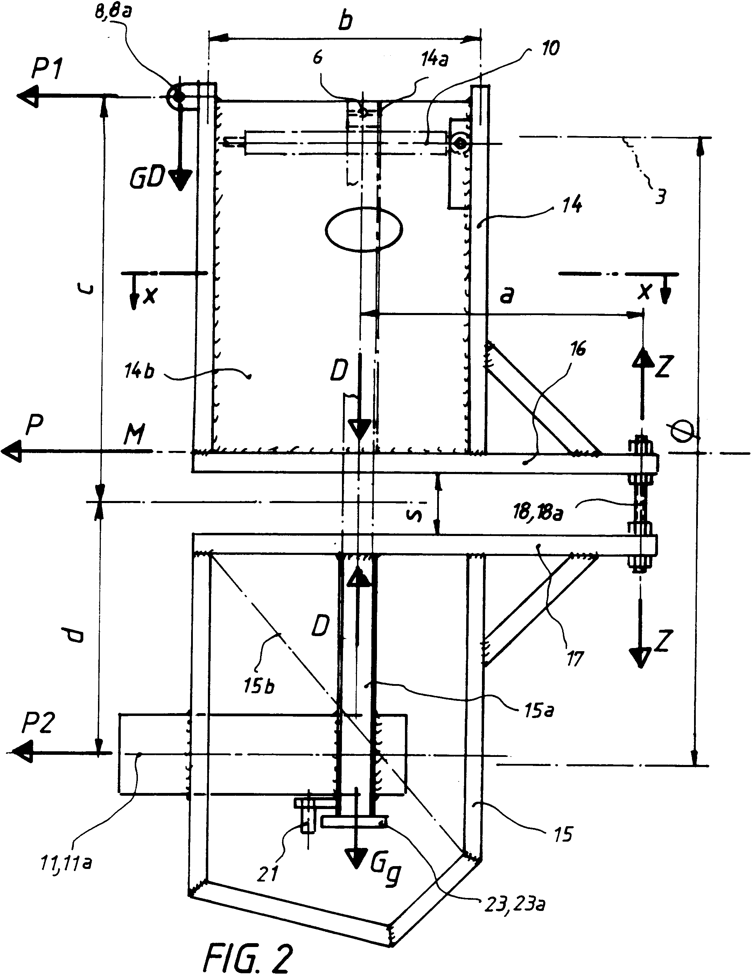

Fig.2 zeigt die erfindungsgemäße Lagerträgerkonstruktion mit den angreifenden Kräften. Die Kraft P stellt dabei den gesamten Preßdruck der für die Verdichtung des Mülls erforderlich ist dar, welcher sich in die beiden Kräfte P1 und P2 aufteilt, den Kräften also, welche über den hinteren Deckel -7- in die beiden Lagerträger -14,15- eingeleitet werden. Das Gewicht des heckseitigen Deckels -7- mit Schnecke und Schüttung ist mit GD eingezeichnet und greift an den oberen Deckellagern -8,8a- an. Die beiden Lagerträger -14- bzw. -15-, sind wie in Fig. 2 erkennbar ist in einem Abstand -s- voneinander angeordnet und umschließen einen Großteil des unteren und oberen Bogenbereiches des Außenringes des Großkugellagers -6-. Durch die hohen, waagrecht liegenden Preßkräfte P1 und P2 wird ein Drehmoment P1.c bzw. P2.d erzeugt, welches erfindungsgemäß *nicht* vom Großkugellager -6- aufgenommen werden braucht, da die Verbindung der beiden Lagerträger -14,15- erst in einem Abstand -a- vom Großkugellager -6- erfolgt, und somit das Gegenmoment Z.a bewirkt, daß der Außenring des Großkugellagers -6- nur im kleinen Bereich -s- mit einer für diesen unbedeutenden Druckkraft D belastet wird. Erfindungsgemäß ist dabei der Hebelabstand -a- größer als die Breite -b- der Lagerträger -14,15-. Die beiden Lagerträger -14,15- weisen jeweils in Richtung zur Behälterachse einen waagrecht liegenden Begrenzungsträger -16- bzw. -17 - auf, welche den Hebelarm mit der Lange -a- bilden. Die Konstruktion des oberen und unteren Lagerträgers -14- bzw. -15- ist vorzugsweise so ausgeführt, daß beide Lagerträger -14,15- als den unteren bzw. oberen Bogen des Außenringes des Großkugellagers -6- umfassende starre Kastenträger ausgebildet sind, jedoch keine starre Verbindung zueinander im Bereich des Großkugellagers -6- aufweisen. Die Lagerbleche -14a- und -15a- reichen dabei bis zu den waagrecht liegenden Begrenzungsträgern -16- bzw. -17- und sind mit diesen verbunden. Die Konstruktion des oberen und unteren Lagerträgers -14,15- könnte auch als Fachwerkskonstruktion ausgebildet sein, wie der angedeuteten Stab -15b- in Fig.2 zeigt. Das Gesamtauflagegewicht im heckseitigen Bereich ist mit Gg eingezeichnet. Als innere Kräfte kommen natürlich noch die Verriegelungskräfte des Deckels -7-, sowie die Drehbehälter-Antriebskräfte dazu, welche ebenfalls durch die erfindungsgemäße Konstruktion optimal abgeleitet werden. Insbesondere wird die Stützkraft des durch den Trommelantrieb entstehenden Gegenmomentes im Bereich der Antriebseinheit -20a- bzw. -20b- nicht unmittelbar auf den Außenring des Großkugellagers -6- geführt, sondern in die Träger -17- bzw. -16- abgeleitet, wodurch das Reaktionsmoment über einen Großteil des Außenringes des Großkugellagers verteilt wird.

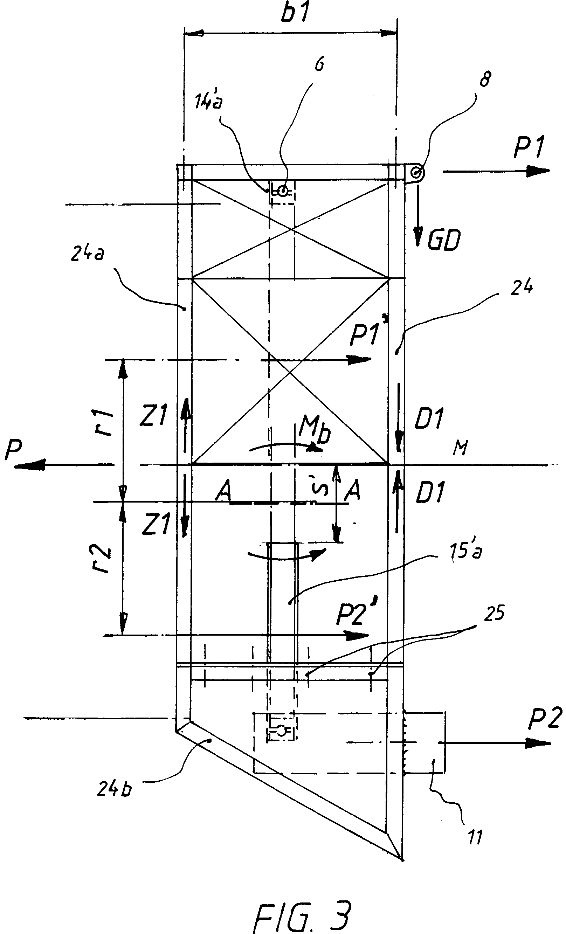

Fig. 3 zeigt die Ausführung eines Kastenträgers nach einem bisher bekannten Fahrzeug (AT-PS 362 721), bei welcher der Kastenträger -24- als starre, das gesamte Großkugellager umfassende Konstruktion ausgebildet ist. Der Kastenträger -24- besteht aus zwei Teilen -24a,24b- welche mittels der Schrauben -25- starr im Bereich des Großkugellagers -6- miteinander verbunden sind. Durch diese Konstruktion wird zwar das Gewicht GD des hinteren Deckels -7- vom Großkugellager -6- ferngehalten, *nicht* jedoch die wesentlich höhere Biegebelastung des Großkugellagers -6- durch die Preßkraft P. Wie in Fig. 3 erkennbar ist, ist der Kastenträger -24- als starres, das Großkugellager -6- insgesamt umfassendes Gebilde anzusehen. Die gesamte Preßkraft P teilt sich wieder in die beiden Vektoren P1 und P2 auf, welche jedoch aufgrund der starren Ausbildung des Kastenträgers -24- einen reduzierten Angriffspunkt aufweisen, nämlich in den Schwerpunkten der Kreisbögen des Außenringes des Großkugellagers -6-, welche von den Lagerblechen -14'a- bzw. -15'a- bestrichen werden. Dadurch entsteht aber ein Drehmoment P1'.r1 bzw. P2'.r2, welches vom Großkugellager -6- voll aufgenommen werden muß und das Lager speziell im freien Bereich -s'- auf Biegung beansprucht (Querschnitt A-A). Zusätzlich wird der hintere, senkrecht stehende Träger des Kastenträgers -24- auf Knickung und der vordere Träger auf Zug beansprucht. Eine derartige Konstruktion weist also eher die Nachteile einer schweren Bauart auf, sowohl in bezug auf das Großkugellager -6- als auch in bezug auf den hoch belasteten Kastenträger. Der bekannte Kastenträger -24- ist zudem mit einer großen Breite -b1- auszuführen, wogegen die erfindungsgemäße Konstruktion den Vorteil eines schmalen Lagerträgers -14,15- mit der Breite -b- aufweist, sodaß der Zahnkranz -20-, wie in Fig. 1 erkennbar ist, auch außerhalb der beiden Kastenträger -14,15- liegen kann.

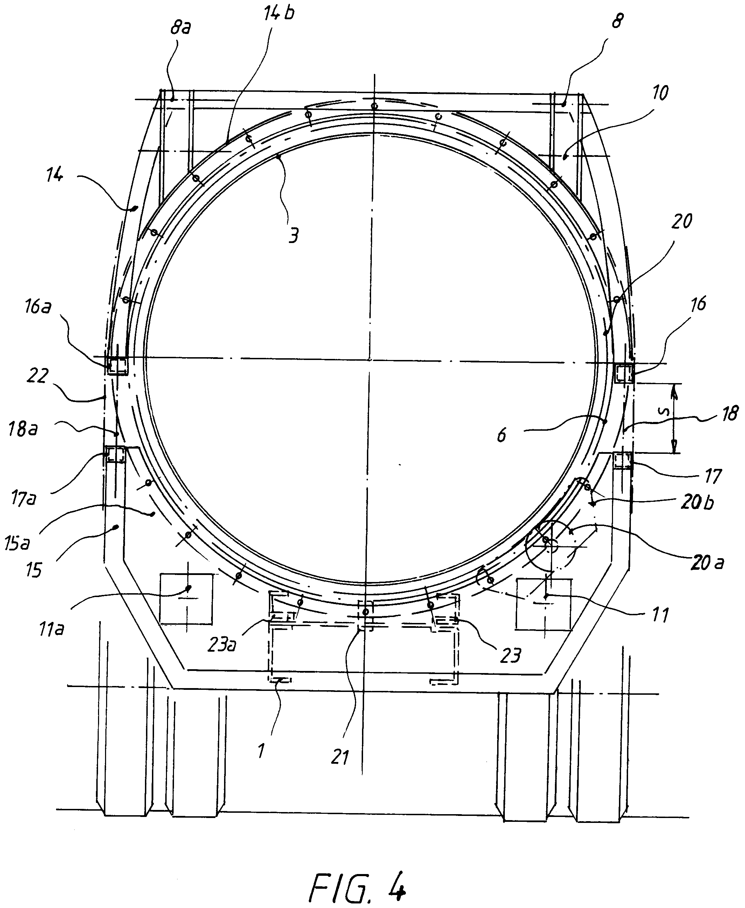

Fig.4 zeigt die Heckansicht des erfindungsgemäßen Fahrzeuges, bei geöffnetem hinteren Deckel -7-. Wie dabei erkennbar ist, wird das Großkugellager -6- jeweils im oberen und unteren Bereich von einem Lagerträger -14- bzw. -15- kreisbogenförmig umfaßt. Gegenüberliegend weisen die Lagerträger -14,15- Abschlußträger -16,17- bzw. -16a,17a- auf, welche einen Abstand -s- voneinander aufweisen, der nur einen Bruchteil des gesamten Umfanges des Großkugellagers -6- ausmacht. Der untere Lagerträger -15- weist die beiden Konsolen -23-bzw. -23a- auf, sowie den zentralen Bolzen -21-. Der untere Lagerträger -15- trägt ferner die Antriebseinheit in Form eines hydraulisch bewegten Zahnritzels -20a-, oder eines über einen größeren Kreisbogen eingreifenden Zykloidenantriebes -20b-, zur Übertragung von wesentlich größeren Umfangskräften. Die Lagerung des Zahnritzels -20a- bzw. des Zykloidenantriebes -20b- erfolgt daher in der Antriebseinheit. Im unteren Lagerträger -15- sind ferner die Verriegelungen -11,11a- für den Deckel -7- vorhanden. Der obere Lagerträger -14- weist ein Trägerblech -14b- auf, an welchem das Großkugellager -6- befestigt ist, sodaß die gesamte Lagerträgerkonstruktion als starres Einzelgebilde anzusehen ist. Am oberen Lagerträger -14- sind weiters die Lagerungen für den Deckel -7- und die Lagerungen der Hydraulikschwenkzylinder -10- für den Deckel -7- vorgesehen. Die Verkleidung -22- umfaßt, wie in Fig. 4 dargestellt ist, selbstverständlich den Umfang des gesamten Kastenträgersystems, wobei die Lagerträgerprofile als Verbindungselemente dienen.

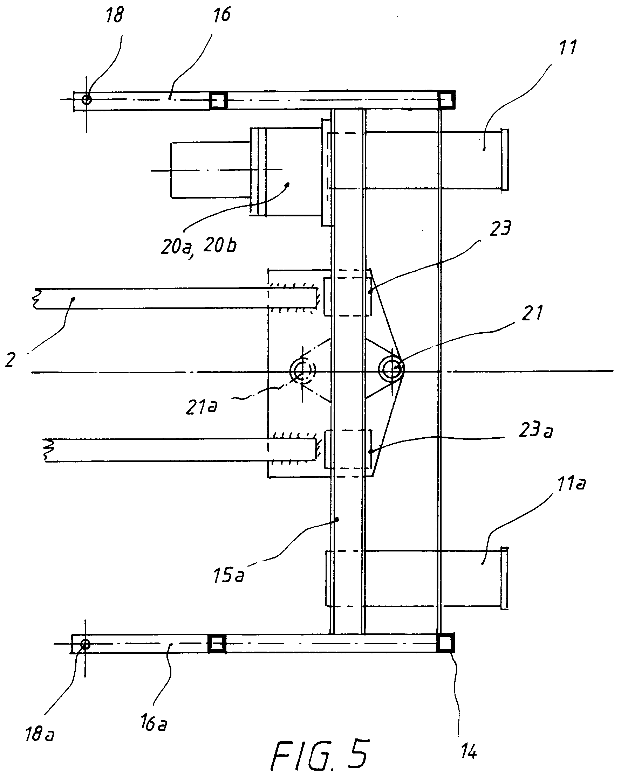

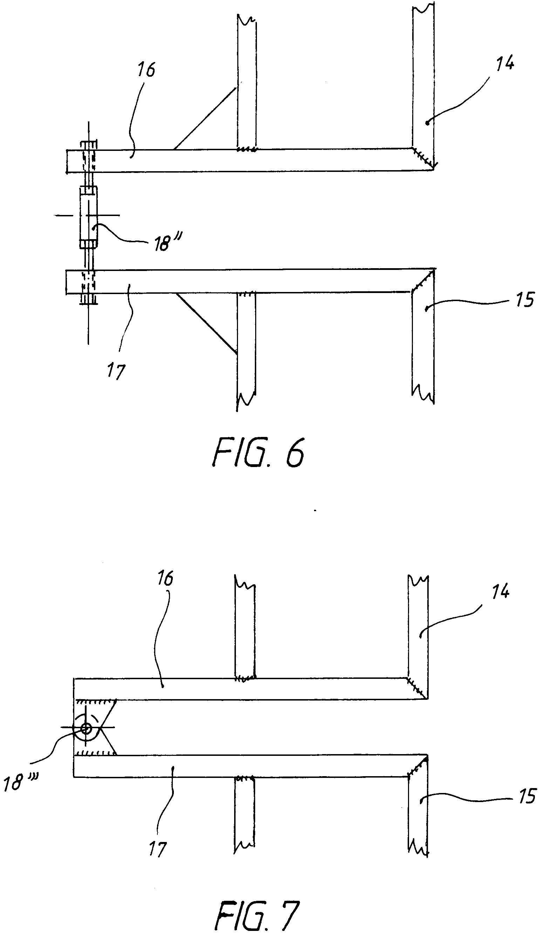

In Fig. 5 ist ein Schnitt x-x, gemäß Fig. 2 dargestellt, also eine Ansicht von oben, bei abgenommenem Behälter -3-. Der Hilfsrahmen -2- trägt den vertikal stehenden Lagerzapfen -21- und dient als Auflage für die beiden Auflagebleche -23,23a-. Wie in Fig. 5 dargestellt ist, kann der Lagerzapfen -21- sowohl hinter dem unteren Lagerträger -15a-, als auch vor diesem angeordnet sein. Je weiter hinten dieser Anlenkpunkt vorgesehen wird, umso weniger Querkräfte sind von diesem Zapfen -21- zu übertragen. Die Fig. 5 und 6 zeigen bevorzugte Verbindungsarten der beiden Träger -16- und -17-. In Fig. 6 ist ein Spannschloß -18''- dargestellt, zur möglichen Vorspannung der Lagerträger -14,15- zueinander. Fig. 7 zeigt als Verbindungsvariante ein bewegliches Scharnier -18'''-. Es sind noch weitere Verbindungsmöglichkeiten, wie z.B. ein Spannseil, elastische Gummielemente, Stahlfedern usw. denkbar.

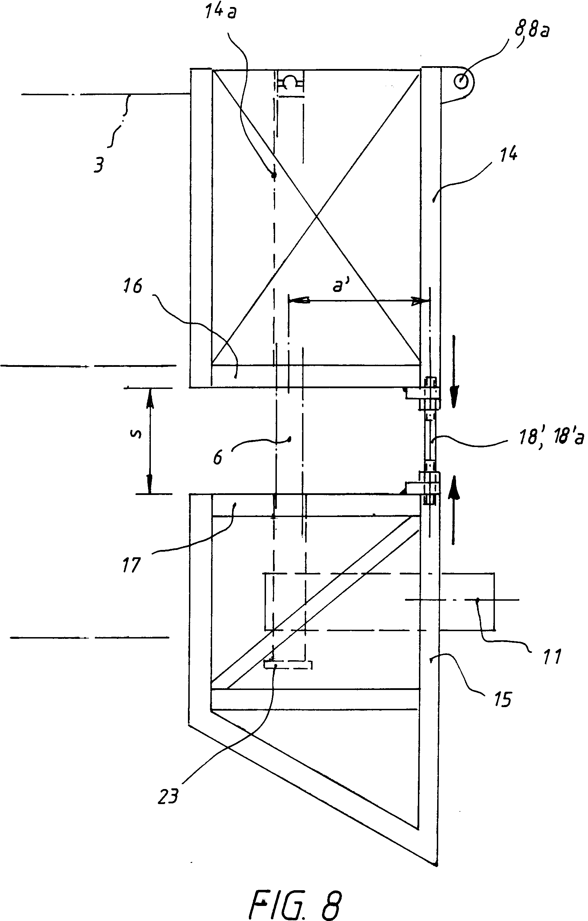

Fig. 8 zeigt eine weitere Ausführungsform der Erfindung, wobei die beiden Lagerträger-14,15-, welche hier ebenfalls im Abstand -s- voneinander angeordnet sind- im hinteren Bereich der Lagerträger -14,15- mittels einer einstellbaren Druckschraube -18',18'a- miteinander verbunden sind. Dabei ist allerdings das Hebelmaß -a'- kleiner als bei der Ausführung nach Fig. 2, die Druckkraft in der Lagerträgerverbindung -18'- ist also größer als die entsprechende Zugkraft nach Fig. 2. Trotzdem wird auch bei dieser Ausführung die Biegebelastung des Großkugellagers -6- vermieden.

## Patentansprüche

1. Müllfahrzeug, mit einer als Sammelbehälter dienenden Drehtrommel, deren heckseitig offenes Ende durch einen in Bezug auf die Trommel undrehbar gehaltenen, mit einem an einem Kegelstumpf angeordneten Leit-oder Verdichtungsblech ausgerüsteten, hydraulisch hochschwenkbaren Deckel verschließbar ist und deren vordere geschlossene Stirnwand mit einem zentralen Drehzapfen in einem Lagerbock gelagert ist und deren heckseitige Lagerung mittels eines Großkugellagers, unter Befestigung seines Außenringes an einem unteren Träger erfolgt, der sich an einem Zapfen abstützt, welcher an einem am Fahrzeugrahmen befestigten Hilfsrahmen unterhalb der Trommeldrehachslinie sitzt und der im rechten Winkel zur Trommeldrehachslinie beidseits des Zapfens lose auf dem Hilfsrahmen aufliegt, wobei am hinteren Ende der Drehtrommel an ihrem Außenmantel ein Zahnkranz, eine den Behalter rutschfest umspannende Kette, ein Rollenring od. dgl. zur Einleitung des Drehantriebes mittels einer ein Zahnritzel, einen Zykloidenantrieb od. dgl. aufweisenden Antriebseinheit angeordnet ist, ***dadurch gekennzeichnet***, daß der Lagerträger aus einem oberen und einem unteren, je eine Bogenhälfte des Außenringes des Großkugellagers (6) umhüllenden, insbesondere als Kastenträger ausgebildeten Lagerträger (14; 15) besteht und die Lagerträger (14;15) in vertikaler Richtung - im Bereich einer Ebene parallel zur Behälterachse - in einem Abstand (s) voneinander angeordnet sind und die Lagerträger (14;15) zu beiden Seiten der Drehtrommel (3), im wesentlichen waagrecht liegende, in Langsrichtung der Drehtrommel (3) verlaufende Träger (16,17;16a,17a) aufweisen, welche mittels Spannelementen (18,18a;18',18'a,18'',18''') in einer, zur Ebene des Großkugellagers (6) parallel und im Abstand (a) liegenden Ebene miteinander verbunden sind, wobei der obere Lagerträger (14) die Lagerungen (8,8a), für den Deckel (7) und dessen Schwenkzylinder (10) und der untere Lagerträger (15) die Antriebseinheit (20a bzw. 20b) und die Verriegelungen (11,11a) für den Deckel (7) trägt, und der Abstand (a) der Lagerträgerverbindung zur Ebene des Großkugellagers (6) größer ist als die in Langsrichtung der Drehtrommel (3) gemessene Breite (b) der Lagerträger (14;15), und daß der Zahnkranz (20) am Außenmantel der Drehtrommel (3) vorzugsweise in einem Bereich außerhalb der Lagerträger (14;15) vorgesehen ist.

2. Müllfahrzeug nach Anspruch 1, dadurch gekennzeichnet, daß die Lagerträger (14;15) als Fachwerksträger ausgebildet sind.

3. Müllfahrzeug nach Anspruch 1, dadurch gekennzeichnet, daß der den Außenring des Großkugellagers (6) axial abstützende Zapfen (21), in Fahrtrichtung gesehen, hinter dem Großkugellager (6) angeordnet ist.

4. Müllfahrzeug nach Anspruch 1, dadurch gekennzeichnet, daß die Träger (16,17; bzw. 16a,17a) mit einer Zug- od. Druckstange (18,18a;18',18'a), einem Spannschloss (18''), einem Scharnier (18''') oder einer elastischen Gummi-Federverbindung miteinander verbunden sind.
